# EUROPÄISCHE PATENTSCHRIFT

(11) **EP 1 288 143 B1**
(45) Veröffentlichungstag und Bekanntmachung des Hinweises auf die Patenterteilung: **30.03.2005**
(21) Anmeldenummer: 02019590.5
(22) Anmeldetag: 02.09.2002
(51) Int. Cl.: B65G 53/22

(54) **Befüllungssystem für Holzpelletslagerbunker**
Wood pellets filling device for bunkers
Système de remplissage d'un conteneur avec des granules de bois compressés

(30) Priorität: 03.09.2001 DE 20114516 U
(43) Veröffentlichungstag der Anmeldung: 05.03.2003
(73) Patentinhaber: Lockfisch, Thomas, 83361 Kienberg (DE)
(72) Erfinder: Lockfisch, Thomas, 83361 Kienberg (DE)
(74) Vertreter: Pfister, Stefan Helmut Ulrich

(56) Entgegenhaltungen:
- DE-A- 1 556 686
- DE-A- 2 437 799
- DE-C- 909 431
- GB-A- 826 966
- GB-A- 2 183 210

## Beschreibung

Die Erfindung betrifft ein Befüllungssystem für Holzpelletslagerbunker von Holzpelletsheizanlagen, bestehend aus einem Vorrat von Holzpellets, die durch einen Förderantrieb über eine Zuleitung in einen Bunker förderbar sind und eine Druckmeßsonde den Druck, insbesondere den Luftdruck im Bunker überwacht.

Aus der DE-OS 24 37 799 geht eine Fördervorrichtung für staubförmiges oder körniges Gut hervor, bei der das Material mittels Saugförderung in einen Behälter und von dort aus mittels Druckförderung zu einem Endlagerplatz befördert wird. Durch die Kombination von Saug- und Druckförderung kann die Fördervorrichtung in ihren Dimensionen relativ klein gehalten werden und es können trotzdem größere Förderstrecken überwunden werden. Ein Unterdruckwächter überwacht den Druckabfall in der Saugleitung, um gegebenenfalls zusätzlich Luft in die Saugleitung einströmen zu lassen, und ein Druckwächter stellt den Druck im Behälter fest und überwacht, ob das Fördergut gut abgeleitet wird beziehungsweise zeigt einen Förderstau an. Durch Auflockern des Materials oder Erhöhen des Drucks im Behälter, um die Absaugleitung von Verstopfungen zu befreien, wird die kontinuierliche Funktion der Fördervorrichtung gewährleistet.

Die GB 2 183 210 A offenbart eine Fördervorrichtung zum Fördern von schüttfähigem Material, die ebenfalls, wie die zuvor beschriebene Fördervorrichtung, das Material mittels Saugförderung von einem ersten Kessel in einen zweiten und von dort aus zur endgültigen Lagerstelle befördert. Hier führt die Kombination von Saug- und Druckförderung dazu, die Gesamthöhe der Fördervorrichtung zu reduzieren. Hier wäre es auch möglich, das Material mittels Druckförderung von dem ersten in den zweiten Kessel zu befördern. Der Abtransport vom zweiten Kessel zur Endlagerstelle erfolgt mittels Druckförderung. Über ein Kontrollsystem, bestehend unter anderem aus einem Drucksensor, läßt sich die Fördermenge einstellen.

Bei diesen Behältern der dargestellten Fördervorrichtungen besteht nicht die Gefahr, daß darin durch das Einbringen von Material ein zu hoher Druck entstehen könnte, da diese erstens mittels Saugförderung gefüllt werden und zweitens nur als Durchgangslager dienen, mit einer Ausgangsöffnung, durch die eventuell angestauter Druck entweichen kann.

Zum Heizen von Wohngebäuden und dergleichen gibt es neben den bekannten Gas- und Ölheizanlagen auch sogenannte Pellets-Heizanlagen, bei denen Holzpellets aus komprimierten Holzspänen, wie sie beispielsweise in Sägereien, Sägewerke und anderen holzverarbeitenden Betrieben anfallen, zum Einsatz kommen. Die Späne werden dabei auf eine Länge von ca. 10 mm bis 45 mm und einen Durchmesser von etwa 6 mm zu wurmartigen Pellets gepreßt. Mit Hilfe einer Förderschneke oder dergleichen werden diese aus einem Bunker in den Brennraum der Heizanlage transportiert. Um die Holzpellets vom Preßwerk zum Gebäude, beziehungsweise zur Heizanlage, zu transportieren, werden in der Regel Silowagen, wie sie zum Beispiel auch für den Transport von Mehl bekannt sind, verwendet. Die Holzpellets werden dann durch einen Luftstrom als Föderantrieb in den Bunker geblasen. Vom Bunker geraten sie weiter mit Hilfe beispielsweise der Förderschnecke in den Brennraum der Heizanlage. Die Holzpellets können mit einer Leistung von bis zu ca. 1.000 m³ pro Stunde in den Bunker geblasen werden, wobei ein maximaler Überdruck von 2 bar herrschen kann. Dabei beträgt die Füllgeschwindigkeit etwa 100 kg bis zu 1 t pro Minute.

Ein Problem stellt dabei die Ableitung der verdrängten Luft dar. Zu diesem Zweck wird oftmals ein Absauggerät vorgesehen, das in der Lage ist einen leichten Unterdruck zu erzeugen. Allerdings kann es insbesondere im Endstatium des Befüllens des Bunkers zu einer Überdrucksituation kommen. Eine eventuell erzeugte Druckwelle vom Kompressor des Transportfahrzeuges kann das Absauggerät nicht mehr kompensieren, wodurch es zu Beschädigungen des Bunkerraumes kommt, wie herausgedrückte Wände, Türen, Fenster und dergleichen.

Die Erfindung hat es sich deshalb zur Aufgabe gestellt, das Befüllen derartiger Bunker sicherer und überprüfbarer zu machen.

Zur Lösung dieser Aufgabe schlägt die Erfindung ein Befüllungssystem, wie oben beschrieben, vor, bei dem ein Druckmeßsensor den Druck, insbesondere den Luftdruck im Bunker überwacht, wobei die Druckmeßsonde den Druck im Bunker mißt und bei Überschreiten eines Überdruckwertes die Förderung von Holzpellets unterbindet oder drosselt.

Mit Hilfe eines derartigen Druckmeßsensors läßt sich ein eventueller Überdruck im Bunker sofort feststellen, wobei der Druckmeßsensor weiter entsprechende Signale geben kann, um Gefahren abzuwenden. Dabei löst die Erfindung nicht nur ein Signal aus, wenn die Druckmeßsonde einen Überdruck mißt, der zu Beschädigungen führen kann. Die Erfindung sieht auch vor, daß die Druckverhältnisse im Bunker überwacht werden und, wenn entsprechende kritische Werte erreicht werden, dies angezeigt wird oder aber entsprechende Gegenmaßnahmen wie Drosselung des Förderstromes und so weiter eingeleitet werden. Durch die erfindungsgemäße Ausgestaltung wird erreicht, daß das Befüllen des Bunkers sicherer, weil kontrollierter abläuft und so die sonst bekannten Risiken die zu einer Zerstörung des Bunkerraumes führen konnten, zuverlässig vermieden werden.

Bei der bevorzugten Ausführungsform der Erfindung ist vorgesehen, daß der Druckmeßsensor den Druck im Bunker mißt und bei Überschreiten eines Überdruckwertes die Förderung von Holzpellets unterbindet oder drosselt. Dabei kann die Druckmeßsonde beispielsweise auf ein Ventil in der Zuleitung zum Bunker wirken, so daß dieses Ventil kurzfristig geschlossen wird, wodurch die Zufuhr von weiteren Holzpellets unterbunden wird. Alternativ wird der Förderantrieb gedrosselt um das Ausbilden einer Druckwelle zu vermeiden.

Alternativ ist vorgesehen, daß bei Feststellen eines Überdruckes die Förderung von Holzpellets dadurch unterbunden wird, daß möglichst kurzfristig der Förderantrieb für die Holzpellets angehalten wird. In diesem Fall wirkt der Drucksensor zum Beispiel auf die Stromzuführung für den Förderantrieb.

Bei einer anderen Ausführungsform der Erfindung wird beispielsweise die Leistung des Absauggerätes erhöht, so daß der entstehende Überdruck sofort abgesaugt wird und die Befüllung nicht unterbrochen wird.

Herrscht im Bunker wieder Normaldruck, so kann beispielsweise durch einen weiteren Regler das Ventil wieder geöffnet werden, wodurch die Zufuhr von Holzpellets in den Bunker fortgesetzt wird.

Bei der bevorzugten Ausführungsform der Erfindung befindet sich der Pelletvorrat auf einem Silowagen. Bei einer weiteren vorzugsweisen Ausführungsform der Erfindung ist der Pelletvorrat in einem ortsfesten Vorratsraum, einem Behälter oder dergleichen untergebracht. In beiden oben genannten Fällen ist jeweils der Pelletvorrat mit Hilfe einer Förderanlage, die zum Beispiel mit dem Ventil ausgestattet ist, mit dem Bunker verbunden. Der Bunker dient als Vor- beziehungsweise Sammelraum für die Holzpellets vor dem Beschicken des eigentlichen Brennraums in der Heizanlage.

Durch die Beschaffenheit der Holzpellets, können diese günstigerweise durch ein Gebläse, das als Förderantrieb vorgesehen ist, in den Bunker gefüllt werden. Diese Art der Befüllung ist besonders zeit- und kostengünstig, sowie bewährt.

Bei einer günstigen Variante der Erfindung wirkt der Druckmeßsensor auf den Förderantrieb. Dabei kann der Druckmeßsensor nicht nur dazu benutzt werden, den Förderbetrieb bei Überschreiten eines gewissen Drucks völlig einzustellen, sondern diesen beispielsweise gegen Ende des Befüllungsvorganges zu regulieren, beispielsweise also zu verlangsamen, so daß eine Druckwelle gar nicht erst entsteht.

Zum Entfernen der verdrängten Luft ist der Bunker günstigerweise mit einer Absaugvorrichtung verbunden, die beim Befüllen des Bunkers im Bunker einen Unterdruck erzeugt. Diese Vorrichtung beschleunigt den Befüllvorgang erheblich, was sich wiederum kostengünstig auswirkt.

Bei einer weiteren günstigen Variante der Erfindung ist eine Steuerung vorgesehen, die einerseits mit dem Drucksensor verbunden ist und andererseits auf das Ventil und/oder den Förderantrieb und/oder die Absaugvorrichtung wirkt. Auf diese Weise ist eine Steuerung des Befüllungsvorganges möglich, wobei beispielsweise ein entstehender Überdruck einerseits durch das Verlangsamen des Förderns und andererseits durch das gleichzeitige Erhöhen der Absaugwirkung ausgeglichen werden kann. So muß der Zuliefervorgang nicht völlig unterbrochen werden, was aber natürlich im Falle einer eventuell entstehenden Druckwelle auch vorgesehen ist.

Günstigerweise ist zwischen dem Pelletvorrat und dem Ventil in der Zuleitung ein Überdruckventil vorgesehen. Über dieses Überdruckventil kann ein eventuelle vom Kompressor des Fahrzeuges erzeugter Überdruck entweichen, beziehungsweise es kann auch eine Schaltung vorgesehen sein, die den Kompressor abschaltet.

Es ist weiterhin günstig, wenn in der Zuleitung und/oder im Pelletvorrat ein Meßsensor zur Ermittlung des geförderten Pelletsvolumens vorgesehen ist. Mit Hilfe eines solchen Meßsensors läßt sich auch die Fördermenge regulieren, so daß beispielsweise zum Ende des Füllvorgangs hin die Fördermenge geringer wird, um die Druckwelle zu vermeiden.

Günstigerweise arbeitet der Meßsensor dabei mit der Steuerung zusammen und steuert in Abhängigkeit des Befüllungsgrades des Bunkers den Förderantrieb und/oder die Absaugvorrichtung. Es läßt sich so auch beispielsweise von außen leicht feststellen, wie weit die Befüllung des Bunkers vorangeschritten ist, beziehungsweise wie weit der Silo beziehungsweise das Vorratsgefäß für die Pellets entleert worden ist.

Günstigerweise wirkt dabei der Meßsensor auf die gleiche Steuerung ein, die auch die Druckmeßsonde überwacht. Es können dabei verschiedene Befüllvorschriften vorgesehen werden, die in einem Speicher der Steuerung abgelegt sind und entsprechend dem Fortschritt der Befüllung berücksichtigt werden. Dadurch wird zum einen eine möglichst ununterbrochene und zügige Befüllung angestrebt, die gleichzeitig eine Beschädigung oder Zerstörung des Bunkers vermeidet.

Vorzugsweise ist das Ventil in der Zuleitung ein Quetschventil, es kommen aber auch andere Ventile wie Hahn, Klappen oder sonstige Ventile in Frage. Bei einer bevorzugten Ausführungsform der Erfindung ist die aus Sonde, Ventil und gegebenenfalls Steuerung und Förderantriebsabschaltung bestehende Druckmeßvorrichtung am Gebäude beziehungsweise am Bunker oder dergleichen stationär angeordnet. Insbesondere bei häufigen Befüllen des Bunkers ist eine solche Bauweise von Vorteil.

Es kann aber auch vorgesehen sein, daß die Druckmeßvorrichtung mobil zum Beispiel am Silowagen angeordnet ist. So kann beispielsweise der Lieferant der Holzpellets die Druckmessung als besonderen Service und Sicherheitsfaktor anbieten, insbesondere für solche Kunden, die nicht über eine fest installierte Meßsonde und Steuerung verfügen.

Bei einer vorteilhaften Ausführungsform der Erfindung ist vorgesehen, daß der Bunker eine Aufnahme für den Druckmeßsensor aufweist. Bei dieser Aufnahme kann es sich beispielsweise um eine Röhre, eine Hülse, einen Stutzen oder dergleichen handeln, der beispielsweise im Bunker vorgesehen ist und den Sensor schützt. Es kann auch vorgesehen sein, daß der Sensor selber nicht im Bunker angeordnet ist, sondern in einer Aufnahme außerhalb des Bunkers und mit dem Bunker durch eine Öffnung verbunden ist. Günstigerweise ist der Sensor auch in der Nähe der Öffnung des Förderantriebes angeordnet, so daß eine eventuell sich aufbauende Druckwelle sofort bemerkt werden kann.

In der Zeichnung ist ein erfindungsgemäßes Ausführungsbeispiel eines erfindungsgemäßen Systems schematisch beschrieben. Es zeigen:

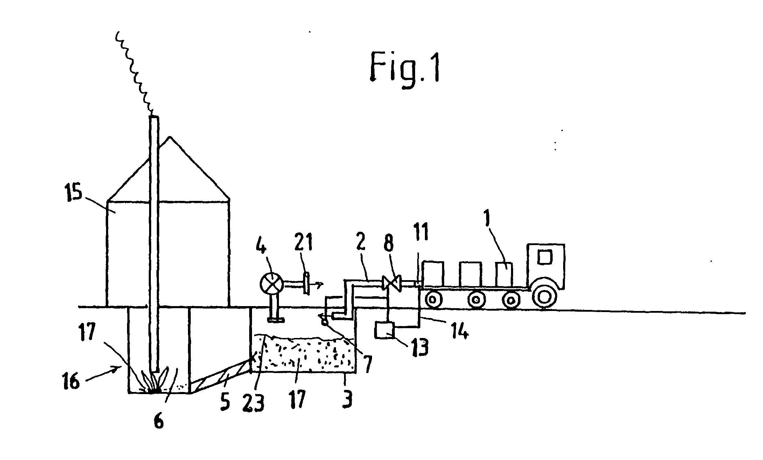

- Fig. 1: eine Seitenansicht, teilweise im Schnitt, eines erfindungsgemäßen Systemes und
- Fig. 2: eine Seitenansicht, ebenfalls teilweise im Schnitt, einer Einzelheit einer Variante des erfindungsgemäßen Systems.

Das System gemäß der Erfindung besteht im Wesentlichen aus dem Gebäude 15 mit der Heizungsanlage 16, wobei die Brennkammer 6 über die Förderschnecke 5 mit den Pellets 17 aus dem Bunker 3 versorgt wird. Der Bunker 3 wiederum wird beschickt über die Zuleitung 2, durch die die Pellets 17 aus dem Vorratsraum 10 beziehungsweise dem Silowagen 1 mit Hilfe des Förderantriebs 11 gefördert werden.

Die Holzpellets 17 werden beispielsweise mit Hilfe des Silowagens 1 angefahren und über die Zuleitung 2 mit Hilfe eines Kompressors oder eines anderen Förderantriebes 11 in den Bunker 3 geblasen. In der Zuleitung 2 ist ein Ventil 8 vorgesehen, das bei Bedarf die Zufuhr der Holzpellets 17 unterbricht. Die Regelung des Ventils 8 erfolgt beispielsweise über die Druckmeßvorrichtung 13, die mit der Druckmeßsonde 7 verbunden ist. Die Druckmeßsonde 7 befindet sich entweder in einer Aufnahme 18 im inneren des Bunkers 3, sie kann aber auch neben dem Bunker in der Aufnahme 18 angeordnet sein und mit dem Bunker durch eine Öffnung verbunden sein. Günstigerweise ist die Druckmeßsonde in der Aufnahme 18 im oberen Bereich in der Nähe des Auslasses 19 der Zuleitung 2 angeordnet. Auf diese Weise wird eine sich aufbauende Druckwelle frühzeitig erkannt, so daß die Druckmeßvorrichtung 13 entsprechende Maßnahmen ergreifen kann. Außer der Steuerung des Ventils 8 wobei auch beispielsweise eine Verminderung der Förderleistung erfolgen kann, ist auch eine Steuerung des Förderantriebes 11 vorgesehen, der über die Kompressorabschaltung 14 erfolgt. Neben der kompletten Abschaltung des Kompressors beziehungsweise Förderantriebes 11 ist es auch möglich die Leistung lediglich zu verringern. Insbesondere kann die Steuerung der Druckmeßvorrichtung 13 so eingerichtet sein, daß sie, wenn der Druck zum Ende der Befüllzeit hin ansteigt, die Fördermenge reduziert.

Zum Ausgleichen des Drucks im Vorratsraum 10 ist beispielsweise ein Überdruckventil 12 vorgesehen, das, wenn das Ventil 8 geschlossen wird, den Überdruck, der durch den Förderantrieb 11 entsteht, ins Freie leitet.

Des Weiteren ist am Bunker 3 eine Absaugvorrichtung 4 vorgesehen, die beispielsweise mit einem Filter 20 ausgestattet ist, damit keine Holzpellets in die Pumpe geraten und einem weiteren Staubfilter 21, damit keine Holzpelletteile 17 ins Freie geraten, wobei die Absaugvorrichtung 4 die Aufgabe hat, die verdrängte Luft, die durch das Befüllen des Bunkers aus dem Pelletvorrat 9 komprimiert wird, ins Freie abzuleiten. Dabei erzeugt die Absaugvorrichtung 4 einen leichten Unterdruck im Bunker 3, was das Befüllen erleichtert.

Im Bunker 3 kann beispielsweise ein weiterer Meßsensor 22 vorgesehen sein, der die Füllhöhe 23 im Bunker 3 ermittelt und mit Hilfe einer Steuerung 24 über die Leitungen 25, 26 mit der Absaugvorrichtung, beziehungsweise mit dem Förderantrieb, verbunden ist. Je nach Füllhöhe 23 gibt der Meßsensor 22 über die Leitung 27 ein Signal an die Steuerung 24, wodurch diese dann entweder über die Leitung 26 mit Hilfe des Förderantriebes 11 die Förderleistung reduziert oder über die Leitung 25 mit Hilfe der Absaugvorrichtung 4 die Absaugleistung erhöht. Auch eine Kombination beider Maßnahmen dient zum Vermeiden einer Druckwelle im Inneren des Bunkers 3, wodurch die Bunkerwände beschädigt oder gar eingedrückt würden.

Die Druckmeßvorrichtung 13 mit der Druckmeßsonde 7, ebenso wie die Steuerung 24 mit dem Meßsensor 22 können mobil vorgesehen sein, so daß sie der Lieferant der Holzpellets 17 beispielsweise auf seinem Silowagen 1 mit sich führt und jedesmal vor dem Befüllen am Bunker anbringt. ,

Bei einer anderen Ausführungsform der Erfindung sind Meßsensor 22 mit der Steuerung 24 und die Druckmeßvorrichtung 13 mit der Druckmeßsonde 7 beispielsweise stationär am Bunker 3 angeordnet.

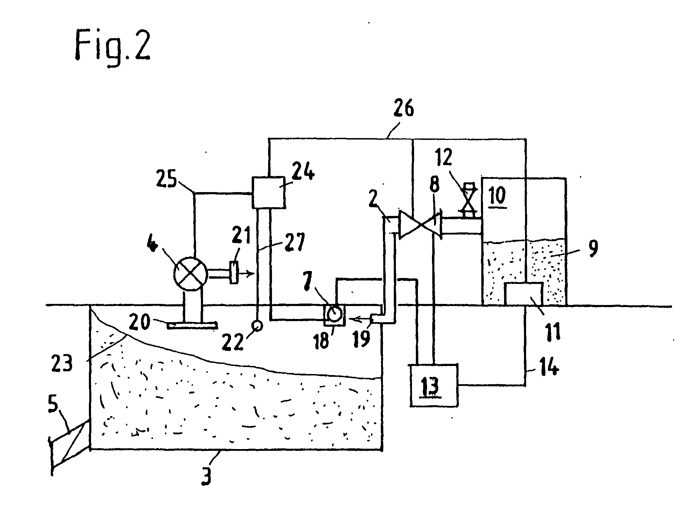

In Fig. 2 ist gezeigt, daß die Steuerung 24 sowie die Druckmeßvorrichtung 13 in getrennten Elementen vorgesehen sind. Diese können natürlich auch in einem Gerät beziehungsweise in einer gemeinsamen Schaltung realisiert werden.

## Patentansprüche

1. Befüllungssystem für Holzpelletslagerbunker von Holzpelletsheizanlagen, bestehend aus einem Vorrat von Holzpellets, die durch einen Förderantrieb über eine Zuleitung in einen Bunker förderbar sind, und eine Druckmeßsonde (7) den Druck, insbesondere den Luftdruck im Bunker (3) überwacht, **dadurch gekennzeichnet, daß** die Druckmeßsonde (7) den Druck im Bunker (3) mißt und bei Überschreiten eines Überdruckwertes die Förderung von Holzpellets (17) unterbindet oder drosselt.

2. System nach dem vorhergehenden Anspruch, **dadurch gekennzeichnet, daß** die Druckmeßsonde (7) auf ein Ventil (8) in der Zuleitung (2) zum Bunker (3) wirkt.

3. System nach einem oder mehreren der vorhergehenden Ansprüche, **dadurch gekennzeichnet, daß** sich der Pelletvorrat (9) auf einem Silowagen (1) oder in einem ortsfesten Vorratsraum (10), einem Behälter oder dergleichen befindet.

4. System nach einem oder mehreren der vorhergehenden Ansprüche, **dadurch gekennzeichnet, daß** ein Gebläse als Förderantrieb (11) für das Befüllen des Bunkers (3) aus dem Pelletvorrat (9) vorgesehen ist.

5. System nach einem oder mehreren der vorhergehenden Ansprüche, **dadurch gekennzeichnet, daß** die Druckmeßsonde (7) auf den Förderantrieb (11) wirkt.

6. System nach einem oder mehreren der vorhergehenden Ansprüche, **dadurch gekennzeichnet, daß** der Bunker (3) mit einer Absaugvorrichtung (4) verbunden ist, die beim Befüllen des Bunkers (3) im Bunker (3) einen Unterdruck erzeugt und/oder der Bunker (3) eine Aufnahme (18) für die Druckmeßsonde (7) aufweist.

7. System nach einem oder mehreren der vorhergehenden Ansprüche, **dadurch gekennzeichnet, daß** eine Steuerung (24) vorgesehen ist, die einerseits mit der Drucksonde (7) verbunden ist, und andererseits auf das Ventil (8) und/oder Förderantrieb (11), und/oder Absaugvorrichtung (4) wirkt.

8. System nach einem oder mehreren der vorhergehenden Ansprüche, **dadurch gekennzeichnet, daß** zwischen Pelletvorrat (9) und dem Ventil (8) in der Zuleitung (2) ein Überdruckventil (12) vorgesehen ist.

9. System nach einem oder mehreren der vorhergehenden Ansprüche, **dadurch gekennzeichnet, daß** im Bunker (3), in der Zuleitung (2) und/oder im Pelletvorrat (9) ein Meßsensor (22) zur Ermittlung des geförderten Pelletsvolumens vorgesehen ist.

10. System nach einem oder mehreren der vorhergehenden Ansprüche, **dadurch gekennzeichnet, daß** der Meßsensor (22) mit der Steuerung (24) verbunden ist und in Abhängigkeit des Befüllungsgrades des Bunkers (3) den Förderantrieb (11) und/oder die Absaugvorrichtung (4) steuert.

11. System nach einem oder mehreren der vorhergehenden Ansprüche, **dadurch gekennzeichnet, daß** das Ventil (8) in der Zuleitung (2) ein Quetschventil , ein Hahn-, Klappen- oder anderes Ventil ist.

12. System nach einem oder mehreren der vorhergehenden Ansprüche, **dadurch gekennzeichneet, daß** die aus Sonde (7), Ventil (8) und gegebenenfalls Steuerung und Förderantriebabschaltung (14) bestehende Druckmeßvorrichtung (13) am Gebäude (15), beziehungsweise am Bunker (3) oder dergleichen stationär angeordnet ist oder daß die Druckmeßvorrichtung (13) mobil, zum Beispiel am Silowagen (1), angeordnet ist.

## Claims

1. Filling system for wood pellet storage bunkers of wood pellet heating installations, comprising a supply of wood pellets which can be conveyed by a conveying drive via a feeding pipe into a bunker, and a pressure gauge probe (7) which controls the pressure, in particular the air pressure in the bunker (3), **characterised in that** the pressure gauge probe (7) measures the pressure in the bunker (3) and, if an excess pressure value is exceeded, stops or throttles the conveying of wood pellets (17).

2. System according to the preceding claim, **characterised in that** pressure gauge probe (7) acts on a valve (8) in the feeding pipe (2) to the bunker (3).

3. System according to one or more of the preceding claims, **characterised in that** the pellet supply (9) is on a silo wagon (1) or in a stationary storage room (10), a container or the like.

4. System according to one or more of the preceding claims, **characterised in that** a fan is provided as conveying drive (11) for filling the bunker (3) out of the pellet supply (9).

5. System according to one or more of the preceding claims, **characterised in that** the pressure gauge probe (7) acts on the conveying drive (11).

6. System according to one or more of the preceding claims, **characterised in that** the bunker (3) is connected with a suction device (4) which produces negative pressure in the bunker (3) when the bunker (3) is filled, and/or the bunker (3) has a receiver (18) for the pressure gauge probe (7).

7. System according to one or more of the preceding claims, **characterised in that** a control system (24) is provided, which, on the one hand, is connected with the pressure gauge probe (7) and, on the other hand, acts on the valve (8) and/or the conveying drive (11), and/or the suction device (4).

8. System according to one or more of the preceding claims, **characterised in that** between the pellet supply (9) and the valve (8) in the feeding pipe (2) a pressure control valve (12) is provided.

9. System according to one or more of the preceding claims, **characterised in that** in the bunker (3), in the feeding pipe (2) and/or in the pellet supply (9) a measuring sensor (22) is provided for determining the conveyed pellet volume.

10. System according to one or more of the preceding claims, **characterised in that** the measuring sensor (22) is connected with the control system (24), and, depending on the filling level of the bunker (3), controls the conveying drive (11) and/or the suction device (4).

11. System according to one or more of the preceding claims, **characterised in that** the valve (8) in the feeding pipe (2) is either a squeezing valve, a plug-and-ball valve, a flap valve or is another valve.

12. System according to one or more of the preceding claims, **characterised in that** pressure measuring device (13) consisting of the probe (7), the valve (8), and, if necessary, control system and conveying drive cutoff (14) is arranged on the building (15), respectively the bunker (3) or the like, stationary or the pressure measuring device (13) is arranged mobile, for example on the silo wagon (1).

## Revendications

1. Système de remplissage de silos à granulats de bois destinés à des chaufferies à granulats de bois, comportant une réserve de granulats de bois qui peuvent être transportés via un tuyau d'acheminement et à l'aide d'une commande de transport vers un silo, et un capteur de pression (7) surveillant la pression d'air et en particulier celle à l'intérieur du silo (3), **caractérisé en ce que** le capteur de pression (7) mesure la pression à l'intérieur du silo (3) et provoque lors du dépassement d'une valeur limite une diminution ou un arrêt de l'acheminement des granulats de bois (17).

2. Système selon la revendication 1, **caractérisé en ce que** le capteur de pression (7) agit sur une valve (8) située dans le tuyau d'acheminement (2) vers le silo (3).

3. Système selon une ou deux des revendications précédentes, **caractérisé en ce que** la réserve de granulats (9) est située dans un wagon de stockage (1) ou dans un espace de stockage (10) ou dans un conteneur ou dans un dispositif similaire.

4. Système selon une ou plusieurs des revendications précédentes, **caractérisé en ce que** la commande de transport (11) est une soufflerie, permettant de remplir le silo (3) à partir de la réserve de granulats (9).

5. Système selon une ou plusieurs des revendications précédentes, **caractérisé en ce que** le capteur de pression (7) agit sur la commande de transport (7).

6. Système selon une ou plusieurs des revendications précédentes, **caractérisé en ce que** le silo (3) est connecté à un dispositif d'évacuation d'air (4) créant une sous-pression dans le silo (3) lors de son remplissage et/ou **en ce que** le silo (3) possède un espace (18) permettant de recevoir le capteur de pression (7).

7. Système selon une ou plusieurs des revendications précédentes, **caractérisé en ce qu'**il existe un système de contrôle (24), connecté d'un côté au capteur de pression (7) et d'un autre côté à la valve (8) et/ou à la commande de transport (11) et/ou au dispositif d'évacuation d'air (4).

8. Système selon une ou plusieurs des revendications précédentes, **caractérisé en ce qu'**une soupape de surpression (12) est située dans le tuyau d'acheminement (2) entre la réserve de granulats (9) et la valve (8).

9. Système selon une ou plusieurs des revendications précédentes, **caractérisé en ce qu'**il existe un débitmètre (22) dans le tuyau d'acheminement (2) et/ou dans la réserve de granulats (9) afin de connaître le volume de granulats transporté.

10. Système selon une ou plusieurs des revendications précédentes, **caractérisé en ce que** le débitmètre (22) est connecté au système de contrôle (24), pilotant ainsi la commande de transport (11) et/ou le dispositif d'évacuation d'air (4) en fonction du degré de remplissage du silo (3).

11. Système selon une ou plusieurs des revendications précédentes, **caractérisé en ce que** la valve (8) située dans le tuyau d'acheminement (2) est soit une valve d'écrasement, soit un robinet, soit une valve à clapet ou tout autre type de valve.

12. Système selon une ou plusieurs des revendications précédentes, **caractérisé en ce que** le dispositif de mesure de pression (13), pouvant consister en un capteur de pression (7), en une valve (8) et le cas échéant en un système de contrôle de la commande de transport (14), est fixé soit au bâtiment ou au silo ou à un autre endroit fixe, soit de façon mobile par exemple au wagon de stockage (1).
